(19) Europäisches Patentamt
European Patent Office
Office européen des brevets

(11) EP 3 431 532 A1

(12) EUROPEAN PATENT APPLICATION

(43) Date of publication:
**23.01.2019 Bulletin 2019/04**

(51) Int Cl.:
***C08J 5/22*** *(2006.01)* ***C08L 27/16*** *(2006.01)*

(21) Application number: **17181801.6**

(22) Date of filing: **18.07.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Solvay Specialty Polymers Italy S.p.A.
20021 Bollate (MI) (IT)**

(72) Inventors:
- **MERLO, Luca
22030 MONTORFANO (CO) (IT)**
- **OLDANI, Claudio
20015 Parabiago (MI) (IT)**
- **DI NICOLO', Emanuele
21055 Gorla Minore (VA) (IT)**
- **CAMPANELLI, Pasquale
20812 Limbiate (MB) (IT)**

(74) Representative: **Benvenuti, Federica
Solvay S.A.
Département de la Propriété Intellectuelle
Rue de Ransbeek, 310
1120 Bruxelles (BE)**

# (54) MEMBRANES COMPRISING FLUORINATED POLYMERS AND USE THEREOF

(57) The invention pertains to compositions suitable for manufacturing membranes based on vinylidene fluoride (VDF) polymers and certain polymerisable ionisable additives having VDF backbone, said composition delivering outstanding permeability performances in aqueous media filtration and separation processes, while still being compatible with typical water-induced coagulation processes typical of membrane manufacture, to porous membranes thereof, processes for their manufacture and uses thereof, notably for the filtration of water phases.

EP 3 431 532 A1

## Description

### Technical Field

The present invention relates to compositions suitable for manufacturing membranes, to porous membranes thereof, processes for their manufacture and uses thereof, notably for the filtration of water phases.

### Background Art

Fluorinated polymers are widely used in the preparation of microfiltration and ultrafiltration membranes due to their good mechanical strength, high chemical resistance and thermal stability.

Porous membranes are discrete, thin interfaces that moderate the permeation of chemical species in contact with them. The key property of porous membranes is their ability to control the permeation rate of chemical species through the membrane itself. This feature is exploited in many different applications like separation applications (water and gas) or drug delivery applications.

Polymeric membranes suitable for use as microfiltration and ultrafiltration typically control the permeation under a "sieve" mechanism since the passage of liquid or gas is mainly governed by a convective flux. Such polymeric membranes are mainly produced by phase inversion methods which can give raise to items with very large fraction of voids (or in other words, with high porosity).

A homogeneous polymeric solution (also referred to as "dope solution") containing a polymer, a suitable solvent and/or a co-solvent and, optionally, one or more additives is typically processed by casting into a film and then brought to precipitation by contacting it with a non-solvent medium by the so-called Non-Solvent Induced Phase Separation (NIPS) process. The non-solvent medium is usually water or a mixture of water and surfactants, alcohols and/or the solvent itself.

Precipitation can also be obtained by decreasing the temperature of the polymeric solution by the so-called Thermal Induced Phase Separation (TIPS) process.

Alternatively, the precipitation may be induced by contacting the film processed by casting with air at very high water vapour content by the so-called Vapour Induced Phase Separation (VIPS) process.

Still, the precipitation may be induced by evaporation of the solvent from the film processed by casting by the so-called Evaporation Induced Phase Separation (EIPS) process. Typically in this process an organic solvent with low boiling point (such as THF, acetone, MEK and the like) is used in admixture with water (the so called "non-solvent"). The polymer solution is first extruded and then precipitates due to the evaporation of the volatile solvent and the enrichment of the non-solvent.

The above processes can be used in combination and/or in sequence to provide membranes having specific morphology and performances. For example, EIPS process can be combined with the VIPS process and NIPS process in order to complete the coagulation process.

Generally speaking, nevertheless, membranes based on fluoropolymers are endowed with high liquid water repellency and low liquid water permeability, so that their performances in water purifications and related aqueous-based separations are still not optimized. In other words, because they are substantially hydrophobic in nature, such hydrophobicity impedes water to penetrate into the fluoropolymer membrane and therefore requires higher pressure and consumes more energy. In order to provide such hydrophobic porous fluorine membranes with a capability of permeating water there-through, it is necessary to make inner surfaces of the fine pores of the materials hydrophilic. Further, it is generally recognized that high hydrophobicity makes fluoropolymer membranes be easily fouled in ultrafiltration/microfiltration processes.

Different approaches have been pursued; including e.g. approaches based on grafting hydrophilic species on the surface of membranes, incorporation of hydrophilic comonomers in polymer chain of main fluoropolymer constituent, incorporation of hydrophilization additives, etc...

Having regards to this last approach, LANG, Wan-Zhong, et al. Preparation and characterization of PVDF_PFSA blend hollow fiber UF membrane. Journa/ of Membrane Science. 2007, vol.288, p.123-131. discloses PVDF-perfluorosulfonic acid (PFSA) blends, useful for manufacturing hollow fiber ultrafiltration membranes; used PFSA consisted of a PTFE back-bone and regularly spaced long perfluorovinyl ether pendant side chains terminated by a sulfonate ionic group.

Similarly, XU, Hai-Peng, et al. Preparation and characterizations of charged PVDF membranes via composite thermally induced phase separation (C-TIPS) method. Journal of Industrial and Engineering Chemistry. 2015, vol.21, p.1005-1013. discloses blends of PVDF and PFSA (as described in previous reference) used for manufacturing dope solutions in N-methylpyrrolidone, said solutions being casted to provide films further quenched and coagulated in a cooling water bath to produce porous membranes.

Nevertheless, in these approaches, the addition of a perfluorosulfonic acid (PFSA) additive having polymer chain based on tetrafluoroethylene recurring units is such to detrimentally affect the overall mechanical performances

of the host PVDF material in which it is dispersed.

While improvements achieved with these methodologies, and compatibility of PFSA additives with porous membranes manufacturing techniques were demonstrated, within this field there is a continuous quest for porous membranes exhibiting still improved water permeability, while maintaining all outstanding advantages of fluoropolymer membranes, and maintaining ability of being processed though water-induced coagulation.

Summary of invention

In facing this technical problem, the Applicant has found a composition suitable for the preparation of both porous and dense articles, notably in the form of films and tubular or hollow fibers.

Thus, in a first aspect, the present invention relates to a composition [composition ($C^L$)] comprising:

- at least one vinylidene fluoride (VDF) polymer [polymer (VDF)], and
- at least one fluorinated ionisable copolymer [polymer (FX)] comprising:

    (i) a plurality of ionisable groups selected from the group consisting of $-SO_3X_a$, $-PO_3X_a$ and $-COOX_a$, whereas $X_a$ is H, an ammonium group or a monovalent metal, and
    (ii) recurring units derived from vinylidene fluoride (VDF) in an amount of at least 60 % moles, with respect to all recurring units of the polymer (FX), wherein the amount of ionisable groups in polymer (FX) is of at least 0.15 meq/g;

  wherein polymer (F) is different from polymer (FX);

  - at least one liquid medium [medium (L)] comprising at least one organic solvent; and
  - optionally at least one further ingredient.

In a second aspect, the present invention relates to a process for manufacturing a porous membrane, said process comprising:

step (i) providing a composition [composition ($C^L$), as defined above];
step (ii) processing the composition provided in step (i) thereby providing a film; and optionally,
step (iii): processing the film provided in step (ii), generally including contacting the film with a non-solvent medium [medium (NS)], thereby providing a porous membrane.

In a third aspect, the present invention pertains to a porous membrane comprising:

- at least one vinylidene fluoride polymer [polymer (VDF)], as described above; and
- at least one fluorinated ionisable copolymer [polymer (FX)], as described above.

Said porous membrane can be characterized as obtainable from the composition ($C^L$) as detailed above and/or manufactured using the method as above detailed.

In a fourth aspect, the present invention pertains to a method of separating an aqueous medium, said method comprising contacting said aqueous medium with a porous membrane comprising:

- at least one vinynlidene fluoride polymer [polymer (VDF)], as described above; and
- at least one fluorinated ionisable copolymer [polymer (FX)], as described above.

The Applicant has surprisingly found that the composition ($C^L$) as detailed above, is particularly effective for being used in the manufacture of membranes, delivering outstanding permeability performances in aqueous media filtration and separation processes, while still being compatible with typical water-induced coagulation processes typical of membrane manufacture.

In particular, the Applicant has found that the VDF-like structure of the ionisable polymer used as additive, comprising recurring units derived from vinylidene fluoride, is such to ensure improved mechanical performances over approaches of the prior art and yet to deliver beneficial effects on hydrophilisation of membranes obtainable therefrom, conferring outstanding flux/permeability behaviour in contact with aqueous media, while not interfering in membrane manufacturing methods involving precipitation/coagulation phenomena, and minimizing leaching of additive during continuous use in combination with aqueous media.

The polymer (VDF)

The expression "vinylidene fluoride polymer" and "polymer (VDF)" are used, within the frame of the present invention for designating polymers comprising recurring units derived from vinylidene fluoride, generally as major recurring units components. So, polymer (VDF) is generally a polymer essentially made of recurring units, more that 50 % by moles of said recurring units being derived from vinylidene fluoride (VDF).

Polymer (VDF) may further comprise recurring units derived from at least one fluorinated monomer different from VDF and/or may further comprise recurring units derived from a fluorine-free monomer (also referred to as "hydrogenated monomer"). The term "fluorinated monomer" is hereby intended to denote an ethylenically unsaturated monomer comprising at least one fluorine atom. The fluorinated monomer may further comprise one or more other halogen atoms (Cl, Br, I).

In particular, polymer (VDF) is generally selected among polyaddition polymers comprising recurring units derived from VDF and, optionally, recurring units derived from at least one ethylenically unsaturated monomer comprising fluorine atom(s) different from VDF, which is generally selected from the group consisting of:

(a) $C_2$-$C_8$ perfluoroolefins such as tetrafluoroethylene (TFE), hexafluoropropylene (HFP), perfluoroisobutylene;
(b) hydrogen-containing $C_2$-$C_8$ fluoroolefins different from VDF, such as vinyl fluoride (VF), trifluoroethylene (TrFE), hexafluoroisobutylene (HFIB), perfluoroalkyl ethylenes of formula $CH_2$=CH-$R_{f1}$, wherein $R_{f1}$ is a $C_1$-$C_6$ perfluoroalkyl group;
(c) $C_2$-$C_8$ chloro- and/or bromo-containing fluoroolefins such as chlorotrifluoroethylene (CTFE);
(d) perfluoroalkylvinylethers (PAVE) of formula $CF_2$=$CFOR_{f1}$, wherein $R_{f1}$ is a $C_1$-$C_6$ perfluoroalkyl group, such as $CF_3$ (PMVE), $C_2F_5$ or $C_3F_7$;
(e) perfluorooxyalkylvinylethers of formula $CF_2$=$CFOX_0$, wherein $X_0$ is a a $C_1$-$C_{12}$ perfluorooxyalkyl group comprising one or more than one ethereal oxygen atom, including notably perfluoromethoxyalkylvinylethers of formula $CF_2$=$CFOCF_2OR_{f2}$, with $R_{f2}$ being a $C_1$-$C_3$ perfluoro(oxy)alkyl group, such as $-CF_2CF_3$, $-CF_2CF_2$-O-$CF_3$ and $-CF_3$; and
(f) (per)fluorodioxoles of formula:

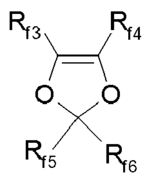

wherein each of $R_{f3}$, $R_{f4}$, $R_{f5}$ and $R_{f6}$, equal to or different from each other, is independently a fluorine atom, a $C_1$-$C_6$ perfluoro(oxy)alkyl group, optionally comprising one or more oxygen atoms, such as $-CF_3$, $-C_2F_5$, $-C\ _3F_7$, $-OCF_3$ or $-OCF_2CF_2OCF_3$.

The vinylidene fluoride polymer [polymer (VDF)] is preferably a polymer comprising :

(a') at least 60 % by moles, preferably at least 75 % by moles, more preferably 85 % by moles of recurring units derived from vinylidene fluoride (VDF);
(b') optionally from 0.1 to 30%, preferably from 0.1 to 20%, more preferably from 0.1 to 15%, by moles of recurring units derived from a fluorinated monomer different from VDF; and
(c') optionally from 0.1 to 10 %, by moles, preferably 0.1 to 5 % by moles, more preferably 0.1 to 1% by moles of recurring units derived from one or more hydrogenated monomer(s),

all the aforementioned % by moles being referred to the total moles of recurring units of the polymer (VDF).

The said fluorinated monomer is advantageously selected in the group consisting of vinyl fluoride ($VF_1$); trifluoroethylene ($VF_3$);
chlorotrifluoroethylene (CTFE); 1,2-difluoroethylene; tetrafluoroethylene (TFE); hexafluoropropylene (HFP); perfluoro(alkyl)vinyl ethers, such as perfluoro(methyl)vinyl ether (PMVE), perfluoro(ethyl) vinyl ether (PEVE) and perfluoro(propyl)vinyl ether (PPVE); perfluoro(1,3-dioxole);
perfluoro(2,2-dimethyl-1,3-dioxole) (PDD). Preferably, the possible additional fluorinated monomer is chosen from chlorotrifluoroethylene (CTFE), hexafluoroproylene (HFP), trifluoroethylene (VF3) and tetrafluoroethylene (TFE).

The choice of the said hydrogenated monomer(s) is not particularly limited; alpha-olefins, (meth)acrylic monomers, vinyl ether monomers, styrenic mononomers may be used; nevertheless, to the sake of optimizing chemical

resistance, embodiment's wherein the polymer (F) is essentially free from recurring units derived from said hydrogenated comonomer(s) are preferred.

Accordingly, the vinylidene fluoride polymer [polymer (VDF)] is more preferably a polymer consisting essentially of :

(a') at least 60 % by moles, preferably at least 75 % by moles, more preferably 85 % by moles of recurring units derived from vinylidene fluoride (VDF);

(b') optionally from 0.1 to 30%, preferably from 0.1 to 20%, more preferably from 0.1 to 15% by moles of a fluorinated monomer different from VDF; said fluorinated monomer being preferably selected in the group consisting of vinylfluoride ($VF_1$), chlorotrifluoroethylene (CTFE), hexafluoropropene (HFP), tetrafluoroethylene (TFE), perfluoromethylvinylether (MVE), trifluoroethylene (TrFE) and mixtures therefrom,

all the aforementioned % by moles being referred to the total moles of recurring units of the polymer (VDF).

Defects, end chains, impurities, chains inversions or branchings and the like may be additionally present in the polymer (VDF) in addition to the said recurring units, without these components substantially modifying the behaviour and properties of the polymer (VDF).

As non-limitative examples of polymers (VDF) useful in the present invention, mention can be notably made of homopolymers of VDF, VDF/TFE copolymers, VDF/TFE/HFP copolymers, VDF/TFE/CTFE copolymers, VDF/TFE/TrFE copolymers, VDF/CTFE copolymers, VDF/HFP copolymers, VDF/TFE/HFP/CTFE copolymers and the like.

VDF homopolymers are particularly advantageous for being used as polymer (VDF) in the composition ($C^L$).

The melt index of the polymer (VDF) is advantageously at least 0.01, preferably at least 0.05, more preferably at least 0.1 g/10 min and advantageously less than 50, preferably less than 30, more preferably less than 20 g/10 min, when measured in accordance with ASTM test No. 1238, run at 230°C, under a piston load of 2.16 kg.

The melt index of the polymer (VDF) is advantageously at least 0.1, preferably at least 1, more preferably at least 5 g/10 min and advantageously less than 70, preferably less than 50, more preferably less than 40 g/10 min, when measured in accordance with ASTM test No. 1238, run at 230°C, under a piston load of 5 kg.

The polymer (VDF) has advantageously a melting point ($T_{m2}$) advantageously of at least 120°C, preferably at least 125°C, more preferably at least 130°C and of at most 190°C, preferably at most 185°C, more preferably at most 180°C, when determined by DSC, at a heating rate of 10°C/min, according to ASTM D 3418.

**The fluorinated ionisable VDF copolymer [polymer (FX)]**

Composition (CL) comprises at least one fluorinated ionisable copolymer [polymer (FX)] comprising:

(i) a plurality of ionisable groups selected from the group consisting of $-SO_3X_a$, $-PO_3X_a$ and $-COOX_a$, whereas $X_a$ is H, an ammonium group or a monovalent metal, and

(ii) recurring units derived from vinylidene fluoride (VDF) in an amount of at least 60 % moles, with respect to all recurring units of the polymer (FX), wherein the amount of ionisable groups in polymer (FX) is of at least 0.15 meq/g.

Generally, polymer (FX) comprises said ionisable groups as pendant groups covalently bound to recurring units derived from a functional monomer (monomer (X), herein below).

The expression "derived from" in connection with the monomer (X) and recurring units of polymer (FX) is intended to encompass recurring units as derived/directly obtained from polymerizing the said monomer (X), and corresponding recurring units derived/obtained by further modification/post-treatment of the same, e.g. by hydrolysis of the same. In other terms, this expression is hereby understood to encompass embodiments whereas monomer (X) comprises said ionisable groups selected from the group consisting of $-SO_3X_a$, $-PO_3X_a$ and $-COOX_a$, whereas $X_a$ is H, an ammonium group or a monovalent metal and embodiments wherein monomer (X) comprises suitable precursors thereof, including notably acid halides, which can be converted by hydrolysis into said ionisable groups.

Polymer (FX) is hence generally a copolymer comprising recurring units derived from one or more than one monomer (X), recurring units derived from vinylidene fluoride and, optionally, recurring units derived from one or more than one additional monomer different from monomer (X) and VDF.

Generally, monomer (X) is a fluorinated monomer; one or more than one additional monomer different from monomer (X) may be a fluorinated monomer.

According to certain embodiment's of the invention, polymer (FX) comprises a plurality of $-SO_3X_a$ group, as above detailed, that is to say is a polymer ($F_{SO3X}$).

Suitable preferred polymers ($F_{SO3X}$) comprising at least one $-SO_3X_a$ group are those polymers comprising recurring units derived from at least one ethylenically unsaturated fluorinated monomer containing at least one $-SO_2X$

group, with X being a halogen, $-OX_a$, with $X_a$ as above (monomer (A), hereinafter); recurring units derived from VDF, and optionally recurring units deriving from at least one ethylenically unsaturated fluorinated monomer free from $-SO_2X$ group, as above detailed, different from VDF (monomer (B), hereinafter).

The phrase "at least one monomer" is used herein with reference to monomers of both type (A) and (B) to indicate that one or more than one monomer of each type can be present in polymer ($F_{SO3X}$). Hereinafter the term monomer will be used to refer to both one and more than one monomer of a given type.

Non limiting examples of suitable monomers (A) are:

- sulfonyl halide fluoroolefins of formula: $CF_2=CF(CF_2)_pSO_2X$, with X being $OX_a$, with $X_a$ as above detailed, F or Cl, preferably F, wherein p is an integer between 0 and 10, preferably between 1 and 6, more preferably p is equal to 2 or 3;
- sulfonyl halide fluorovinylethers of formula: $CF_2=CF-O-(CF_2)_mSO_2X$, with X being $OX_a$, with $X_a$ as above detailed, F or Cl, preferably F, wherein m is an integer between 1 and 10, preferably between 1 and 6, more preferably between 2 and 4, even more preferably m equals 2;
- sulfonyl fluoride fluoroalkoxyvinylethers of formula: $CF_2=CF-(OCF_2CF(R_{F1}))_w-O-CF_2(CF(R_{F2}))_ySO_2X$ with X being $OX_a$, with $X_a$ as above detailed, F or Cl, preferably F, wherein w is an integer between 0 and 2, $R_{F1}$ and $R_{F2}$, equal or different from each other, are independently F, Cl or a $C_1$-$C_{10}$ fluoroalkyl group, optionally substituted with one or more ether oxygens, y is an integer between 0 and 6; preferably w is 1, $R_{F1}$ is $-CF_3$, y is 1 and $R_{F2}$ is F;
- sulfonyl halide aromatic fluoroolefins of formula $CF_2=CF-Ar-SO_2X$ with X being $OX_a$, with $X_a$ as above detailed, F or Cl, preferably F, wherein Ar is a $C_5$-$C_{15}$ aromatic or heteroaromatic group.

Preferably monomer (A) is selected from the group of the sulfonyl fluoride fluorovinylethers of formula $CF_2=CF-O-(CF_2)_m-SO_2F$, wherein m is an integer between 1 and 6, preferably between 2 and 4.

More preferably monomer (A) is $CF_2=CFOCF_2CF_2-SO_2F$ (perfluoro-5-sulfonylfluoride-3-oxa-1-pentene).

Non limiting examples of suitable ethylenically unsaturated fluorinated monomers of type (B) are:

- $C_2$-$C_8$ perfluoroolefins, such as tetrafluoroethylene (TFE), hexafluoropropylene (HFP), perfluoroisobutylene;
- $C_2$-$C_8$ hydrogen-containing fluoroolefins different from VDF, such as trifluoroethylene (TrFE), vinyl fluoride (VF), pentafluoropropylene, and hexafluoroisobutylene;
- $C_2$-$C_8$ chloro- and/or bromo- and/or iodo-containing fluoroolefins, such as chlorotrifluoroethylene (CTFE) and bromotrifluoroethylene;
- fluoroalkylvinylethers of formula $CF_2=CFOR_{f1}$, wherein $R_{f1}$ is a $C_1$-$C_6$ fluoroalkyl, e.g. $-CF_3$, $-C_2F_5$, $-C_3F_7$;
- fluorooxyalkylvinylethers of formula $CF_2=CFOX_0$, wherein $X_0$ is a $C_1$-$C_{12}$ fluorooxyalkyl group comprising one or more than one ethereal oxygen atom, including notably fluoromethoxyalkylvinylethers of formula $CF_2=CFOCF_2OR_{f2}$, with $R_{f2}$ being a $C_1$-$C_3$ fluoro(oxy)alkyl group, such as
- $CF_2CF_3$, $-CF_2CF_2-O-CF_3$ and $-CF_3$
- fluorodioxoles, of formula:

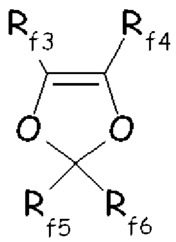

wherein each of $R_{f3}$, $R_{f4}$, $R_{f5}$, $R_{f6}$, equal or different each other, is independently a fluorine atom, a $C_1$-$C_6$ fluoro(halo)fluoroalkyl, optionally comprising one or more oxygen atom, e.g. $-CF_3$, $-C_2F_5$, $-C_3F_7$, $-OCF_3$, $-OCF_2CF_2OCF_3$.

Preferably monomer (B) is selected among:

- $C_2$-$C_8$ perfluoroolefins selected from tetrafluoroethylene (TFE) and/or hexafluoropropylene (HFP);
- $C_2$-$C_8$ hydrogen-containing fluoroolefins different from VDF, selected from trifluoroethylene (TrFE), and vinyl fluoride (VF); and
- mixtures thereof.

Preferred polymers ($F_{SO3X}$) are selected from those consisting essentially of:

(1) recurring units derived from vinylidene fluoride (VDF), these recurring units (1) being in an amount of 55 to 99 % moles, preferably 70 to 95 % moles, with respect to total moles of recurring units of polymer ($F_{SO3X}$);

(2) recurring units derived from at least one monomer selected from the group consisting of:

(j) sulfonyl halide fluorovinylethers of formula: $CF_2=CF-O-(CF_2)_mSO_2X$, with X being $OX_a$, with $X_a$ as above detailed, F or Cl, preferably F, wherein m is an integer between 1 and 10, preferably between 1 and 6, more preferably between 2 and 4, even more preferably m equals 2;

(jj) sulfonyl fluoride fluoroalkoxyvinylethers of formula: $CF_2=CF-(OCF_2\ CF(R_{F1}))_w-O-CF_2(CF(R_{F2}))_ySO_2X$ with X being $OX_a$, with $X_a$ as above detailed, F or Cl, preferably F, wherein w is an integer between 0 and 2, $R_{F1}$ and $R_{F2}$, equal or different from each other, are independently F, Cl or a $C_1$-$C_{10}$ fluoroalkyl group, optionally substituted with one or more ether oxygens, y is an integer between 0 and 6; preferably w is 1, $R_{F1}$ is $-CF_3$, y is 1 and $R_{F2}$ is F; and

(jjj) mixtures thereof;

these recurring units (2) being in an amount of 1 to 45 % moles, preferably 5 to 30 % moles, with respect to total moles of recurring units of polymer ($F_{SO3X}$); and

(3) optionally, recurring units derived from at least one hydrogenated monomer or fluorinated monomer different from VDF; these recurring units (3) being generally in an amount of 0 to 30 % moles, preferably 0 to 15 % moles, with respect to total moles of recurring units of polymer ($F_{SO3X}$).

End-groups, impurities, defects and other spurious units in limited amount (less than 1 % moles, with respect to total moles of recurring units) may be present in the preferred polymers ($F_{SO3X}$), in addition to the listed recurring units, without this affecting substantially the properties of the polymers ($F_{SO3X}$).

According to certain embodiment's, the preferred polymers ($F_{SO3X}$) generally consists essentially of:

(1) from 65 to 95 % moles, preferably from 70 to 93 % moles of recurring units derived from VDF;

(2) from 5 to 35 % moles, preferably from 7 to 30 % moles of recurring units derived from $-SO_2X$ groups-containing monomer(s) (2), as above detailed;

(3) from 0 to 15 % moles, preferably from 0 to 10 % moles of recurring units derived from hydrogenated or fluorinated monomer(s) different from VDF (3), as above detailed,

based on the total moles of recurring units of said polymer ($F_{SO3X}$).

The distribution of different recurring units in polymers (FX) is not particularly limited. Polymers (FX) may be random copolymers, gradient copolymers, block copolymers.

According to certain embodiment's, polymer (FX) is a random copolymer, that is to say that recurring units derived from VDF and recurring units derived from monomer (X) may be distributed in the polymer chain in random manner. These copolymers are generally obtained by polymerizing mixtures of monomers including VDF and monomer (X).

According to certain other embodiment's, polymer (FX) is a block copolymer [polymers (b-FX)], said block copolymer typically having a structure comprising at least one block (A) alternated to at least one block (B), whereas the said blocks differ because of the distribution of recurring units derived from VDF and monomer (X). According to these embodiments, polymer (b-FX) typically comprises, preferably consists of, one or more repeating structures of type (B)-(A)-(B), i.e. comprising a central block (A) having two ends, connected at both ends to a side block (B).

Generally, in polymers (b-FX), block (A) comprises a plurality of ionisable groups, as above detailed, and block (B) is essentially free from said ionisable groups.

Preferred polymers (b-FX) are those comprising:

- at least one block ($A^{VDF}{}_{SO3X}$), selected from sequences consisting essentially of:

(1) recurring units derived from vinylidene fluoride (VDF), these recurring units (1) being generally in an amount of 65 to 99 % moles, preferably 70 to 95 % moles, with respect to total moles of recurring units of block ($A^{VDF}{}_{SO3X}$);

(2) recurring units derived from at least one monomer selected from the group consisting of:

(j) sulfonyl halide fluorovinylethers of formula: $CF_2=CF-O-(CF_2)_mSO_2X$, with X being $OX_a$, with $X_a$ as above detailed, F or Cl, preferably F, wherein m is an integer between 1 and 10, preferably between 1 and 6, more preferably between 2 and 4, even more preferably m equals 2;

(jj) sulfonyl fluoride fluoroalkoxyvinylethers of formula: $CF_2=CF-(OCF_2\ CF(R_{F1}))_w-O-CF_2(CF(R_{F2}))_ySO_2X$ with X being $OX_a$, with $X_a$ as above detailed, F or Cl, preferably F, wherein w is an integer between 0 and

2, $R_{F1}$ and $R_{F2}$, equal or different from each other, are independently F, Cl or a $C_{1-}C_{10}$ fluoroalkyl group, optionally substituted with one or more ether oxygens, y is an integer between 0 and 6; preferably w is 1, $R_{F1}$ is $-CF_3$, y is 1 and $R_{F2}$ is F; and

(jjj) mixtures thereof;

these recurring units (2) being generally in an amount of 1 to 35 % moles, preferably 5 to 30 % moles, with respect to total moles of recurring units of block ($A^{VDF}{}_{SO3X}$); and

(3) optionally, recurring units derived from at least one hydrogenated monomer or fluorinated monomer different from VDF; these recurring units (3) being generally in an amount of 0 to 25 % moles, preferably 0 to 15 % moles, with respect to total moles of recurring units od block ($A^{VDF}{}_{SO3X}$), and

- at least one block ($B_{VDF}$), essentially consisting of a sequence of recurring units derived from vinylidene fluoride and optionally from one or more than one additional fluorinated monomer different from VDF, e.g. HFP, TFE or CTFE, and optionally from a hydrogenated monomer, as above detailed, e.g. a (meth)acrylic monomer, whereas the amount of recurring units derived from VDF is of 85 to 100 % moles, based on the total moles of recurring units of block ($B_{VDF}$).

Most preferably, polymers (b-FX) have a structure of type (B)-(A)-(B), i.e. comprising a central block ($A^{VDF}{}_{SO3X}$), as above detailed, having two ends, connected at both ends to a side block ($B_{VDF}$), as above detailed.

The weight ratio between blocks (A) and blocks (B) in the polymer (b-FX) is typically comprised between 95:5 and 10:90.

According to certain preferred embodiments, the polymers (b-FX) comprise a major amount of blocks (A); according to these embodiment's, the polymer (b-FX) used in the method of the present invention is characterized by a weight ratio between blocks (A) and blocks (B) of 95:5 to 65:35, preferably 90:10 to 70:30.

Polymers (b-FX) may be manufactured by methods know in the art; in particular they may be manufactured by reacting pre-formed separated blocks (A) and blocks (B) or may, preferably, be prepared by reacting a block (A) macromers possessing reactive end groups with constituent monomers of block (B) through sequential polymerization. Generally, block (A) macromers including iodine-containing end-groups are further reacted with suitable initiators for re-initiating polymerization in the presence of fluorinated monomers which are building block (B). Methods for making polymers (b-FX) are disclosed notably in US 2003045662 06.03.2003 , US 6274677 (DAIKIN) 14.08.2001 , US 7455934 25.11.2008 , US 2003023015 30.01.2003.

In general, polymer (FX), be it a block, random, gradient or other type of copolymer, is a semi-crystalline material, possessing a heat of crystallization ($\Delta H_{XX}$) of the polymer (b-FX) of at least 5 J/g, preferably at least 7 J/g, more preferably at least 9 J/g, when determined according to ASTM D3418.

In case of block copolymers, i.e. for polymer (b-FX), it may happen for block(s) (A) to be amorphous and for block(s) (B) to be semi-crystalline; nonetheless, the crystallinity of block (B) and its weight fraction in the polymer (b-FX) are such to provide for an overall heat of crystallization ($\Delta H_{XX}$) of the polymer (b-FX) within the boundaries mentioned above, i.e. of at least 5 J/g, preferably at least 7 J/g, more preferably at least 9 J/g, when determined according to ASTM D3418; such crystalline fraction would be particularly beneficial for enabling efficient co-coagulation of the polymer (b-FX) during porous membrane manufacture.

Having regards to the overall content of ionisable groups in polymer (FX), to the sake of maximizing retention of polymer (FX) in the blend with polymer (VDF) in the membrane when exposed to aqueous media, including during manufacture itself of the membrane, it is generally understood that the said ionisable groups are generally present in an amount of at most 3.50 meq/g, preferably at most 3.20 meq/g, more preferably at most 2.50 meq/g, with respect to the total weight of polymer (FX).

On the other side, regarding minimum amounts of ionisable groups in polymer (FX), to the sake of effective hydrophilicity enhancement, the overall amount of ionisable groups is of at least 0.15, preferably at least 0.25, more preferably at least 0.75 meq/g, with respect to the total weight of polymer (FX).

Composition ($C^L$) preferably comprises an overall amount of polymer (FX) and polymer (VDF) of at least 1 wt.%, more preferably of at least 3 wt.%, even more preferably of at least 5 wt.%, based on the total weight of medium (L), polymer (FX) and polymer (VDF), and/or composition ($C^L$) preferably comprises an overall amount of polymer (FX) and polymer (VDF) of at most 60 wt.%, more preferably of at most 50 wt.%, even more preferably at most 30 wt.%, based on the total weight of medium (L), polymer (FX) and polymer (VDF).

Conversely, the amount of medium (L) in composition ($C^L$) is of at least 40 wt.%, preferably at least 50 wt.%, even more preferably at least 70 wt.%, based on the total weight of medium (L), polymer (FX) and polymer (VDF), and/or the amount of medium (L) in composition ($C^L$) is of at most 99 wt.%, preferably at most 97 wt.%, even more preferably at most 5 wt.%, based on the total weight of medium (L), polymer (FX) and polymer (VDF).

As said, polymer (FX) is used as an additive for polymer (VDF), so it is generally understood that polymer (VDF)

is present in predominant amount over polymer (FX) in composition ($C^L$). Generally, the weight ratio polymer (FX)/polymer (VDF) is of at least 3/97 wt/wt, preferably at least 5/95 wt/wt and/or it is less than 50/50, preferably less than 40/60, preferably less than 30/70.

## The liquid medium

The term "solvent" is used herein in its usual meaning, that is it indicates a substance capable of dissolving another substance (solute) to form an uniformly dispersed mixture at the molecular level. In the case of a polymeric solute, it is common practice to refer to a solution of the polymer in a solvent when the resulting mixture is transparent and no phase separation is visible in the system. Phase separation is taken to be the point, often referred to as "cloud point", at which the solution becomes turbid or cloudy due to the formation of polymer aggregates.

In composition ($C^L$), medium (L) comprises at least one solvent (S) for polymer (VDF).

The medium (L) typically comprises at least one organic solvent selected from the group comprising:

- aliphatic hydrocarbons including, more particularly, the paraffins such as, in particular, pentane, hexane, heptane, octane, nonane, decane, undecane, dodecane or cyclohexane, and naphthalene and aromatic hydrocarbons and more particularly aromatic hydrocarbons such as, in particular, benzene, toluene, xylenes, cumene, petroleum fractions composed of a mixture of alkylbenzenes;
- aliphatic or aromatic halogenated hydrocarbons including more particularly, perchlorinated hydrocarbons such as, in particular, tetrachloroethylene, hexachloroethane;
- partially chlorinated hydrocarbons such as dichloromethane, chloroform, 1,2-dichloroethane, 1,1,1-trichloroethane, 1,1,2,2-tetrachloroethane, pentachloroethane, trichloroethylene, 1-chlorobutane, 1,2-dichlorobutane, monochlorobenzene, 1,2-dichlorobenzene, 1,3-dichlorobenzene, 1,4-dichlorobenzene, 1,2,4-trichlorobenzene or mixture of different chlorobenzenes;
- aliphatic, cycloaliphatic or aromatic ether oxides, more particularly, diethyl oxide, dipropyl oxide, diisopropyl oxide, dibutyl oxide, methyltertiobutyl ether, dipentyl oxide, diisopentyl oxide, ethylene glycol dimethyl ether, ethylene glycol diethyl ether, ethylene glycol dibutyl ether benzyl oxide; dioxane, tetrahydrofuran (THF);
- dimethylsulfoxide (DMSO);
- glycol ethers such as ethylene glycol monomethyl ether, ethylene glycol monoethyl ether, ethylene glycol monopropyl ether, ethylene glycol monoisopropyl ether, ethylene glycol monobutyl ether, ethylene glycol monophenyl ether, ethylene glycol monobenzyl ether, diethylene glycol monomethyl ether, diethylene glycol monoethyl ether, diethylene glycol mono-n-butyl ether;
- glycol ether esters such as ethylene glycol methyl ether acetate, ethylene glycol monoethyl ether acetate, ethylene glycol monobutyl ether acetate;
- alcohols, including polyhydric alcohols, such as methyl alcohol, ethyl alcohol, diacetone alcohol, ethylene glycol;
- ketones such as acetone, methylethylketone, methylisobutyl ketone, diisobutylketone, cyclohexanone, isophorone;
- linear or cyclic esters such as isopropyl acetate, n-butyl acetate, methyl acetoacetate, dimethyl phthalate, $\gamma$-butyrolactone;
- linear or cyclic carboxamides such as N,N-dimethylacetamide (DMAc), N,N-diethylacetamide, dimethylformamide (DMF), diethylformamide or N-methyl-2-pyrrolidone (NMP);
- organic carbonates for example dimethyl carbonate, diethyl carbonate, dipropyl carbonate, dibutyl carbonate, ethylmethyl carbonate, ethylene carbonate, vinylene carbonate;
- phosphoric esters such as trimethyl phosphate, triethyl phosphate (TEP);
- ureas such as tetramethylurea, tetraethylurea;
- methyl-5-dimethylamino-2-methyl-5-oxopentanoate (commercially available under the tradename Rhodialsov Polarclean®).

The following are particularly preferred: N-methyl-pyrrolidone (NMP), dimethyl acetamide (DMAc), dimethylformamide (DMF), dimethylsulfoxide (DMSO), tetrahydrofuran (THF), methyl-5-dimethylamino-2-methyl-5-oxopentanoate (commercially available under the tradename Rhodialsov Polarclean®) and triethylphosphate (TEP).

The medium (L) may further comprise at least one additional liquid component different from solvent (S) (or in other terms, a non-solvent).

Said additional liquid component, which does not have ability to dissolve polymer (VDF), may be added to composition ($C^L$), in an amount generally below the level required to reach the cloud point, typically in amount of from 0.1 % to 40% by weight, preferably in an amount of from 0.1 % to 20% by weight, based on the total weight of medium (L) of the composition ($C^L$ ).

Without being bound by this theory, it is generally understood that the addition of a non-solvent to composition ($C^L$) could be advantageously beneficial in increasing rate of demixing/coagulation in processes for manufacturing porous

membranes, and/or for promoting coagulation by removal of solvent (S) by evaporation.

As said, composition ($C^L$) may optionally comprise at least one further ingredient. Said further ingredient is preferably selected in the group consisting of pore forming agents, nucleating agents, fillers, salts, surfactants.

When used, pore forming agents are typically added to the composition ($C^L$) in amounts usually ranging from 0.1 % to 30% by weight, preferably from 0.5% to 5% by weight, based on the total weight of the composition ($C^L$). Suitable pore forming agents are for instance polyvinyl-pyrrolidone (PVP) and polyethyleneglycol (PEG).

## METHOD OF MAKING POROUS MEMBRANE

In a second aspect, the present invention relates to a method for manufacturing a porous membrane, said method comprising:

step (i): preparing a composition ($C^L$), as defined above;
step (ii): processing the composition provided in step (i) thereby providing a film; and,
step (iii): processing the film provided in step (ii), generally including contacting the film with a non-solvent medium [medium (NS)], thereby providing a porous membrane.

For the purpose of the present invention, by the term "non-solvent medium [medium (NS)]" it is meant a medium consisting of one or more liquid substances incapable of dissolving the polymer (VDF) of composition ($C^L$), and which advantageously promotes the coagulation/precipitation of polymer (VDF) from liquid medium of composition ($C^L$).

The medium (NS) typically comprises water and, optionally, at least one organic solvent selected from alcohols or polyalcohols, preferably aliphatic alcohols having a short chain, for example from 1 to 6 carbon atoms, more preferably methanol, ethanol, isopropanol and ethylene glycol.

The medium (NS) is generally selected among those miscible with the medium (L) used for the preparation of composition ($C^L$).

The medium (NS) may further comprise a solvent (S), as above detailed.

More preferably, the medium (NS) consists of water. Water is the most inexpensive non-solvent medium and can be used in large amounts.

Under step (i), composition ($C^L$) is manufactured by any conventional techniques. For instance, medium (L) may be added to polymer (VDF) and polymer (FX), or, preferably, polymer (VDF) and polymer (FX) are added to medium (L), or even polymer (VDF), polymer (FX) and medium (L) are simultaneously mixed.

Any suitable mixing equipment may be used. Preferably, the mixing equipment is selected to reduce the amount of air entrapped in composition ($C^L$) which may cause defects in the final membrane. The mixing of polymer (VDF), polymer (FX) and the medium (L) may be conveniently carried out in a sealed container, optionally held under an inert atmosphere. Inert atmosphere, and more precisely nitrogen atmosphere has been found particularly advantageous for the manufacture of composition ($C^L$).

Under step (i), the mixing time and stirring rate required to obtain a clear homogeneous composition ($C^L$) can vary widely depending upon the rate of dissolution of the components, the temperature, the efficiency of the mixing apparatus, the viscosity of composition ($C^L$) and the like.

Under step (ii) of the process of the invention, conventional techniques can be used for processing the composition ($C^L$) for providing a film.

Under step (ii), composition ($C^L$) is typically processed by casting thereby providing a film.

Casting generally involves solution casting, wherein typically a casting knife, a draw-down bar or a slot die is used to spread an even film of composition ($C^L$) across a suitable support.

Under step (ii), the temperature at which composition ($C^L$) is processed by casting may be or may be not the same as the temperature at which composition ($C^L$) is mixed under stirring.

Different casting techniques are used depending on the final form of the membrane to be manufactured.

When the final product is a flat membrane, composition ($C^L$) is cast as a film over a flat supporting substrate, typically a plate, a belt or a fabric, or another microporous supporting membrane, typically by means of a casting knife, a draw-down bar or a slot die.

According to a first embodiment of step (ii), composition ($C^L$) is processed by casting onto a flat supporting substrate to provide a flat film.

According to a second embodiment of step (ii), composition ($C^L$) is processed by casting to provide a tubular film.

According to a variant of this second embodiment of the invention, the tubular film is manufactured using a spinneret, this technique being otherwise generally referred as "spinning method". Hollow fibers and capillary membranes may be manufactured according to the spinning method.

The term "spinneret" is hereby understood to mean an annular nozzle comprising at least two concentric capillaries: a first outer capillary for the passage of composition ($C^L$) and a second inner (generally referred to as "lumen")

for the passage of a supporting fluid, also referred to as "bore fluid".

According to this variant of the second embodiment, composition ($C^L$) is generally pumped through the spinneret, together with at least one supporting fluid. The supporting fluid acts as the support for the casting of the composition ($C^L$) and maintains the bore of the hollow fiber or capillary precursor open. The supporting fluid may be a gas, or, preferably, a non-solvent medium [medium (NS)] or a mixture of the medium (NS) with a medium (L). The selection of the supporting fluid and its temperature depends on the required characteristics of the final membrane as they may have a significant effect on the size and distribution of the pores in the membrane.

As said, step (iii) generally includes a step of contacting the film provided in step (ii) with a non-solvent medium [medium (NS)] thereby providing a porous membrane.

Such step of contacting with a medium (NS) is generally effective for precipitating and coagulating the composition ($C^L$) constituting the film of step (ii) into a porous membrane.

The film may be precipitated in said medium (NS) by immersion in a medium (NS) bath, which is often referred to as a coagulation bath.

As an alternative, contacting the film with the medium (NS) can be accomplished by exposing the said film to a gaseous phase comprising vapours of said medium (NS).

Typically, a gaseous phase is prepared e.g. by at least partial saturation with vapours of medium (NS), and the said film is exposed to said gaseous phase. For instance, air possessing a relative humidity of higher than 10 %, generally higher than 50 % (i.e. comprising water vapour) can be used.

Prior to be being contacted with the non-solvent medium (by whichever technique as explained above), the film may be exposed during a given residence time to air and/or to a controlled atmosphere, in substantial absence of said medium (NS). Such additional step may be beneficial for creating a skin on the exposed surface of the film through alternative mechanisms.

For instance, in the spinning method, this may be accomplished by imposing an air-gap in the path that the spinned hollow tubular precursor follows before being driven into a coagulation bath.

According to certain embodiment's, in step (iii), coagulation/precipitation of the composition ($C^L$) may be promoted by cooling. In this case, the cooling of the film provided in step (ii) can be typically using any conventional techniques.

Generally, when the coagulation/precipitation is thermally induced, the solvent (S) of medium (L) of composition ($C^L$) is advantageously a "latent" solvent [solvent (LT)], i.e. a solvent which behaves as an active solvent towards polymer (VDF) only when heated above a certain temperature, and which is not able to solubilize the polymer (VDF) below the said temperature.

When medium (L) comprises a latent solvent or solvent (LT), step (i) and step (ii) of the method of the invention are generally carried out at a temperature high enough to maintain composition ($C^L$) as a homogeneous solution.

For instance, under step (ii), according to this embodiment, the film may be typically processed at a temperature comprised between 60°C and 250°C, preferably between 70°C and 220°, more preferably between 80°C and 200°C, and under step (iii), the film may be typically precipitated by cooling to a temperature below 100°C, preferably below 60°C, more preferably below 40°C.

Cooling may be achieved by contacting the film provided in step (ii) with a cooling fluid, which may be a gaseous fluid (i.e. cooled air or cooled modified atmosphere) or may be a liquid fluid.

In this latter case, it is usual to make use of a medium (NS) as above detailed, so that the phenomena of non solvent-induced and thermally-induced precipitation may simultaneously occur.

It is nevertheless generally understood that even in circumstances whereas the precipitation is induced thermally, a further step of contacting with a medium (NS) is carried out, e.g. for finalizing precipitation and facilitating removal of medium (L).

In cases whereas the medium (L) comprises both a solvent (S) and a non-solvent for polymer (VDF), at least partially selective evaporation of solvent (S) may be used for promoting coagulation/precipitation of polymer (VDF). In this case, solvent (S) and non-solvent components of medium (L) are typically selected so as to ensure solvent (S) having higher volatility than non-solvent, so that progressive evaporation, generally under controlled conditions, of the solvent (S) leads to polymer (VDF) precipitation, and hence actual contact of the film with the medium (NS).

When present in composition ($C^L$), pore forming agents are generally at least partially, if not completely, removed from the porous membrane in the medium (NS), in step (iii) of the method of the invention.

In all these approaches, it is generally understood that the temperature gradient during steps (ii) and (iii), the nature of medium (NS) and medium (L), including the presence of non-solvent in medium (L) are all parameters known to one of ordinary skills in the art for controlling the morphology of the final porous membrane including its average porosity.

The method of the invention may include additional post treatment steps, for instance steps of rinsing and/or stretching the porous membrane and/or a step of drying the same.

For instance, the porous membrane may be additionally rinsed using a liquid medium miscible with the medium (L).

Further, the porous membrane may be advantageously stretched so as to increase its average porosity.

Generally, the porous membrane is dried at a temperature of advantageously at least 30°C.

Drying can be performed under air or a modified atmosphere, e.g. under an inert gas, typically exempt from moisture (water vapour content of less than 0.001% v/v). Drying can alternatively be performed under vacuum.

Still within the scope of embodiment's encompassed by the method of the present invention are processes wherein the porous membrane is further treated/functionalized at its exterior surface using e.g. irradiation techniques and/or contacting with appropriate chemicals/modifying agents.

## POROUS MEMBRANES

As said, in a third aspect, the present invention pertains to a porous membrane comprising:

- at least one vinylidene fluoride polymer [polymer (VDF)], as described above; and
- at least one fluorinated ionisable vinylidene fluoride copolymer [polymer (FX)], as described above.

The expression "porous membrane" is used according to its usual meaning in this technical field, i.e. to denote membrane including pores, i.e. voids or cavity of any shape and size.

As said, the porous membrane of the invention is obtainable from the composition ($C^L$) as detailed above and/or manufactured using the method as above detailed.

The porous membrane of the invention may be in the form of flat membranes or in the form of tubular membranes.

Flat membranes are generally preferred when high fluxes are required whereas hollow fibers membranes are particularly advantageous in applications wherein compact modules having high surface areas are required.

Flat membranes preferably have a thickness comprised between 10 μm and 200 μm, more preferably between 15 μm and 150 μm.

Tubular membranes typically have an outer diameter greater than 3 mm. Tubular membranes having an outer diameter comprised between 0.5 mm and 3 mm are typically referred to as hollow fibers membranes. Tubular membranes having a diameter of less than 0.5 mm are typically referred to as capillary membranes.

Membranes containing pores homogeneously distributed throughout their thickness are generally known as symmetric (or isotropic) membranes; membranes containing pores which are heterogeneously distributed throughout their thickness are generally known as asymmetric (or anisotropic) membranes.

The porous membrane according to the present invention may be either a symmetric membrane or an asymmetric membrane.

The asymmetric porous membrane typically consists of one or more layers containing pores which are heterogeneously distributed throughout their thickness.

The asymmetric porous membrane typically comprises an outer layer containing pores having an average pore diameter smaller than the average pore diameter of the pores in one or more inner layers.

The porous membrane of the invention preferably has an average pore diameter of at least 0.001 μm, more preferably of at least 0.005 μm, and even more preferably of at least 0.01 μm. The porous membrane of the invention preferably has an average pore diameter of at most 50 μm, more preferably of at most 20 μm and even more preferably of at most 15 μm.

Suitable techniques for the determination of the average pore diameter in the porous membranes of the invention are described for instance in Handbook of Industrial Membrane Technology. Edited by PORTER. Mark C. Noyes Publications, 1990. p.70-78.

The porous membrane of the invention typically has a gravimetric porosity comprised between 5% and 90%, preferably between 10% and 85% by volume, more preferably between 30% and 90%, based on the total volume of the membrane.

For the purpose of the present invention, the term "gravimetric porosity" is intended to denote the fraction of voids over the total volume of the porous membrane.

Suitable techniques for the determination of the gravimetric porosity in the porous membranes of the invention are described for instance in SMOLDERS K., et al. Terminology for membrane distillation. Desalination. 1989, vol.72, p.249-262.

The porous membrane of the invention may be either a self-standing porous membrane or a porous membrane supported onto a substrate and/or comprising a backing layer.

The porous membrane comprises at least one layer comprising at least one polymer (F) and a polymer (FX).

A porous membrane supported onto a substrate is typically obtainable by laminating said substrate and/or backing with a pre-formed porous membrane or by manufacturing the porous membrane directly onto said substrate and/or said backing.

Hence, porous membrane may be composed of one sole layer comprising polymer (F) and polymer (FX) or may comprise additional layers.

In particular, the porous membrane of the invention may further comprise at least one substrate. The substrate may be partially or fully interpenetrated by the porous membrane of the invention.

The nature of the substrate/backing is not particularly limited. The substrate generally consists of materials having a minimal influence on the selectivity of the porous membrane. The substrate layer preferably consists of non-woven materials, polymeric material such as for example polypropylene, glass, glass fibers.

The porous membrane of the invention may a porous composite membrane assembly comprising:

- at least one substrate layer, preferably a non-woven substrate,
- at least one top layer, and
- between said at least one substrate layer and said at least one top layer, at least one layer comprising at least one polymer (F) and a polymer (FX).

Typical examples of such porous composite membrane assembly are the so called Thin Film Composite (TFC) structures which are typically used in reverse osmosis or nanofiltration applications.

Non limiting examples of top layers suitable for use in the porous composite membrane assemblies of the invention include those made of polymers selected from the group consisting of polyamides, polyimides, polyacrylonitriles, polybenzimidazoles, cellulose acetates and polyolefins.

Porous membrane layers comprising polymer (F) and polymer (FX) may additionally comprise one or more than one additional ingredients. Nevertheless, embodiment's whereas porous membrane comprises at least one layer consisting essentially of polymer (F) and polymer (FX) are preferred, being understood that additives, and/or residues of pore forming agents may be present, in amounts not exceeding 5 wt.% of the said layer.

In the porous membrane, polymer (FX) is used as an additive for polymer (F), so it is generally understood that polymer (F) is present in predominant amount over polymer (FX) in composition ($C^L$). Generally, the weight ratio polymer (FX)/polymer (F) is of at least 3/97 wt/wt, preferably at least 5/95 wt/wt and/or it is less than 50/50, preferably less than 40/60, preferably less than 30/70.

## METHOD OF SEPARATING AQUEOUS MEDIUM

In a fourth aspect, the present invention pertains to a method of separating an aqueous medium, said method comprising contacting said aqueous medium with a porous membrane, as described above.

All features above described in connection with the porous membrane of the invention are applicable in connection to the use thereof in the method hereby described.

Depending on its average pore diameter, the porous membrane of the invention has different uses, and can be applied to a variety of separation processes, e.g. microfiltration, ultrafiltration, reverses osmosis, which substantially differ in connection with the size of the "rejected"/refused entities, which may be of whichever nature.

The expression 'aqueous medium" is not particularly limited, and encompasses all media including water, including biological fluids, natural fluids or synthetic mixtures.

The method of separating an aqueous medium of the invention may be applied notably to desalination of brackish and sea water, waste water treatment/reclamation, may be used in the food industry, and may be finalized to the separation and purification of chemical and biological products.

According to certain embodiments, the aqueous phase may be notably a water-based phase comprising one or more contaminants.

The aqueous phase may be a particulate suspension of contaminants, i.e. a suspension comprising chemical or physical pollutants (e.g. inorganic particles such as sand, grit, metal particles, ceramics; organic solids, such as polymers, paper fibers, vegetals' and animals' residues; biological pollutants such as bacteria, viruses, protozoa, parasites).

The separation method of the invention can be used for filtrating biologic solutions (e.g. bioburden, virus, other large molecules) and/or buffer solutions (e.g. solutions that may contain small amount of solvents like DMSO or other polar aprotic solvents).

For instance, the separation method of the invention may be a method for purifying biological fluids, such as notably blood, notably in an extracorporeal blood circuit or a dialysis filter. In this case, the used porous membrane generally possesses an average pore diameter of from 0.001 to 5 μm and can be in the form of tubular or hollow fiber membrane.

Otherwise, the separation method of the invention may be notably a method for filtrating water suspensions from suspended particulates; in this case, the used porous membrane generally possesses an average pore diameter of from 5 μm to 50 μm.

The invention will be now be described in connection with the following examples, whose scope is merely illustrative and not intended to limit the scope of the invention.

**Materials:**

The following solvents and additives were obtained from Sigma Aldrich: and used as received: dimethylacetamide (DMAc), triethylphospate (TEP), polyethilenglycol (PEG) 200 and isopropyl alcohol (IPA);
SOLEF® 1015 PVDF is a PVDF homopolymer commercially available from Solvay Specialty Polymers Italy S.p.A. (PVDF-1, herein after);

Preparative Examples.

**Preparative Example 1 - Manufacture of p(VDF)(VDF/SFVE)p(VDF) block copolymer [polymer (b-FX-1)]**

*Step 1: manufacture of iodine-terminated VDF/SFVE macromer*

In a 5 L autoclave 2.6 L of demineralized water, 69.5 g of a monomer of with formula: $CF_2$=CF-O-$CF_2CF_2$-$SO_2F$ (SFVE); 10 ml of a solution of $C_4F$ $_8I_2$ in GALDEN® D02 PFPE (0.33 ml/ml); and 160 g of a 5% weight solution of $CF_2ClO(CF_2CF(CF_3)O)_n(CF_2O)_mCF_2COOK$ in water (average molecular weight of 521 and n/m=10) were introduced
The autoclave, stirred at 650 rpm, was heated at 60°C. A water based solution with 6 g/L of potassium persulfate was added in a quantity of 80 mL. The pressure was maintained at a value of 12.3 bar (abs.) by feeding vinylidene difluoride (VDF).
Every 16.5 g of vinylidene difluoride consumption, 11.5 g of SFVE monomer were added.
The reaction was stopped after 273 min by stopping the stirring, reducing the pressure by venting the VDF and stripping the unreacted monomers with nitrogen (80 L, flow: 80 L/h).
A total of 330 g of VDF was fed into the autoclave.
A powder sample was recovered from this intermediate latex by freeze-thawing, the powder washed in demineralized water (4 x 10 L) and eventually dried in a vent oven at 80°C overnight.
A I-(VDF/SFVE)-I copolymer having an equivalent weight of 670 g/mol (VDF: 85.9 mol%; SFVE: 14.1 mol%, as determined by NMR analysis, using $C_6F_6$ as solvent) and iodine content of 0.55 wt% was obtained.

*Step 2: manufacture of block copolymer*

The aqueous latex obtained in the step 1, stirred at 650 rpm, was then heated at 85°C, and VDF was fed up to a pressure of 20 absolute bars; 0.6 g of ammonium persulfate (APS) were then introduced to initiate the polymerization reaction.
Pressure was maintained at a set-point of 20 bar by continuous feeding of VDF up to a total of 300 g. Then, the reactor was cooled, vented and the latex recovered. 1.3 Kg of powder in -$SO_2F$ form was recovered from the latex by freeze-thawing, the powder washed in demineralized water (4 x 10 L) and eventually dried in a vent oven at 80°C overnight.

**Preparative Example 2 - Manufacture of p(VDF)(VDF/SFVE)p(VDF) block copolymer [polymer (b-FX-2)]**

*Step 1: manufacture of iodine-terminated VDF/SFVE macromer*

Same procedure as in Step 1 of Preparative Example 1 was followed but using in the initial charge into the reactor 122 g of SFVE monomer and 2 ml of a solution of $C_4F_8I_2$ in Galden D02 (0.33 ml/ml);
The reaction was stopped after 34 min, totally 330 g of VDF fed.

*Step 2: manufacture of block copolymer*

The aqueous latex obtained in the step 1, stirred at 650 rpm, was then heated at 85°C, VDF was fed up to a pressure of 20 absolute bars and 0.6 g of ammonium persulfate (APS) as initiator were introduced.
Pressure was maintained at a set-point of 20 bar by continuous feeding of VDF up to a total of 300 g. Then, the reactor was cooled, vented and the latex recovered. 1.3Kg of powder in -$SO_2F$ form was recovered from the latex by freeze-thawing, the powder washed in demineralized water (4 x 10 L) and eventually dried in a vent oven at 80°C overnight.

**Preparative Example 3 - Manufacture of VDF/SFVE random copolymer [polymer (r-FX-1)]**

In a 5 L autoclave, 2.6 L of demineralized water, 67 g of SFVE monomer and 220 g of a 46 % wt aqueous

solution of compound of formula:

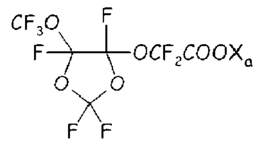

with $X_a$ being $NH_4$ were introduced.

The autoclave, stirred at 650 rpm, was heated at 60°C. A water based solution with 6 g/L of potassium persulfate was added in a quantity of 66 mL. The pressure was maintained at a value of 12.3 bar (abs.) by feeding vinylidene difluoride (VDF).

Every 33 g of vinylidene difluoride consumption, 12 g of SFVE monomer were fed to the autoclave.

The reaction was stopped after 192 min by stopping the stirring, cooling the autoclave and reducing the pressure by venting VDF; a total of 660 g of VDF was fed into the autoclave.

Polymer was recovered from latex by freeze-thawing, the powder washed in demineralized water (4 x 3L) and eventually dried in a vent oven at 80°C overnight.

A VDF-SFVE random copolymer having an equivalent weight of 935 g/mol (VDF: 91.1 mol%; SFVE: 8.9 mol%) was obtained.

**Polymers characterization**

Melt Flow Index (MFI) was determined at 230°C under a piston load of 5 kg according to ASTM D1238.

Melting point ($T_m$) and heat of crystallization ($\Delta H_{XX}$) were determined according to ASTM D3418.

Number-averaged molecular weight was determined by Gel-permeation chromatography (against polystyrene standards in dimethylacetamide).

Intrinsic viscosity was determined according to ASTM D2857 from solutions of polymers in DMF at 0.2% w/v.

**General procedure for hydrolysis and purification of block copolymers and random copolymer**

The powder thus obtained was treated with a solution of $NH_3$ in water (5% by weight, 2L) at 80°C for 16 h under vigorous stirring. The powder was filtered off, washed with demineralized water (3 x 2L x 1 h each) at 80°C under stirring until reaching neutrality of the washing water and eventually dried in a vent oven at 80°C for 24h.

Infrared spectroscopy (FTIR) confirmed that all $-SO_2F$ groups were converted to the corresponding $-SO_3NH_4$. No signal of pristine $-SO_2F$ was detected.

**Table 1**

| Sample | MFI (g/10 min) | Mn (by GPC) | Intrinsic viscosity (ml/g) |
|---|---|---|---|
| polymer (b-FX-1) | 85 | 98 000 | 57 |
| polymer (b-FX-2) | > 200 | 225 000 | 146 |
| polymer (r-FX-1) | 0.1 | 326 000 | 172 |

**Table 2**

| | Overall VDF/SFVE molar ratio | $SO_3X$ groups concentration (meq/g)(*) | Weight ratio block(A) /block(B) | $\Delta H_{XX}$ (J/g) |
|---|---|---|---|---|
| Polymer (b-FX-1) | 92/8 | 0.98 | 70/30 | 23.1 |
| Polymer (b-FX-2) | 86/14 | 1.51 | 70/30 | 9.2 |
| Polymer (r-FX-1) | 91/9 | 1.07 | n.a. | 7.6 |
| (*) as determined on hydrolysed samples | | | | |

**Preparative Example 4 of Comparison - Polymerization of tetrafluoroethylene (TFE) and perfluoro-5-sulfonylfluoride-3-oxa-1-pentene (SFVE)**

In a 22 L autoclave, 11.4 L of demineralized water and 721 g of SFVE monomer were introduced in combination with 1185 g of a 46 wt% aqueous solution of a 46 % wt aqueous solution of compound of formula:

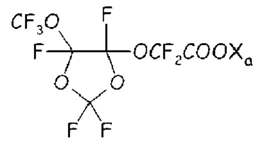

with $X_a$ being $NH_4$.

The autoclave, stirred at 470 rpm, was heated at 55°C. A water based solution with 6 g/L of potassium persulfate was added in a quantity of 150 mL. The pressure was maintained at a value of 13.5 bar (abs.) by feeding tetrafluoroethylene (TFE).

Every 150 g of tetrafluoroethylene consumed in the reactor, 151 g of the monomer SFVE were fed.

The reaction was stopped after 50 min by stopping the stirring, cooling the autoclave and reducing the pressure by venting the TFE; a total of 3000 g of TFE was fed into the autoclave.

Polymer was recovered from latex by freeze-thawing, the so-obtained powder washed in demineralized water (4 x 10 L) and dried in a vent oven at 150°C overnight.

A TFE-SFVE random copolymer having an equivalent weight of 875 g/mol (TFE: 85.6 mol%; SFVE: 14.4 mol%) was obtained, corresponding to a concentration of ionisable groups of 1.14 meq/g.

An aliquot of 500 g of said powder was suspended in a solution of KOH/DMSO/water 14/30/56 wt% (1 L) at 80°C for 16 h and washed with demineralized water (3 x 500 ml x 30 min) at room temperature. The wet powder was treated with a 20 wt% solution of $HNO_3$ in water (500 ml) at room temperature overnight, washed with demineralized water (3 x 500 ml x 30 min) at room temperature and then treated overnight with a 30% solution of $NH_3$ in water (500 ml) at room temperature.

The powder was washed again with demineralized water (3 x 500 ml x 30 min) at room temperature until reaching pH 7 of the washing water and then dried at 100°C in a vent oven overnight.

FT-IR confirmed the quantitative conversion of $-SO_2F$ group into $-SO_3NH$ 4.

**General procedure for the preparation of dope solutions**

Solutions were prepared by adding the required amount of PVDF-1 and the block copolymers (or random copolymer, to the sake of comparison) in N,N-dimethylacetamide (DMAC), and stirring with a mechanical anchor at room temperature. The stirring was continued for several hours. Solutions were left at rest for at least 4 hours for removing air bubbles entrapped in the solution during stirring.

**Porous membrane preparation**

Flat sheet porous membranes were prepared by filming the dope solutions, prepared as above detailed, over a suitable smooth glass support by means of an automatized casting knife. Membrane casting was performed by holding dope solutions, the casting knife and the support temperatures at 25°C, so as to prevent premature precipitation of the polymer. The knife gap was set to 250 μm. After casting, polymeric films were immediately immersed in a coagulation bath in order to induce phase inversion. The coagulation bath consisted of pure de-ionized water. After coagulation the membranes were washed several times in pure water during the following days to remove residual traces of solvent. The membranes were always stored (wet) in water.

**Measurement of water permeability**

The pure water permeability of the porous membranes was measured according to technique known in the art. Water flux (J) through each membrane at given pressure, is defined as the volume which permeates per unit area and per unit time. The flux is calculated by the following equation:

$$J = V / (A \times \Delta t)$$

where V (L) is the volume of permeate, A is the membrane area, and Δt is the operation time.

Water flux measurements were conducted at room temperature using a dead-end configuration under a constant nitrogen pressure of 1 bar. Membrane discs with an effective area of 11.3 $cm^2$ were cut from the items stored in water and placed on a metal plate. For each material, flux is the average of measurements carried out on at least five different discs. The flux is expressed in LMH (litres/squared meter x hour).

**Measurement of gravimetric porosity**

Gravimetric porosity of the membrane is defined as the volume of the pores divided by the total volume of the membrane. The porosities were measured using IPA (isopropyl alcohol) or water as wetting fluid according to the procedure described, for instance, in the Appendix of SMOLDERS, K., et al. Terminology for membrane distillation. Desalination. 1989, vol.72, p.249-262.

Results are summarized in the following Tables:

**Table 3**

| Run | Composition of the dope solution | | | | | |
|---|---|---|---|---|---|---|
| | PVDF-1 | additive | | Pore forming | | DMAC |
| | Wt.% | nature | Wt.% | nature | Wt.% | Wt.% |
| Ex. 5 | 17 | (b-FX-1) | 3 | none | | 80 |
| Ex. 6 | 17 | (b-FX-2) | 3 | none | | 80 |
| Ex. 7 | 17 | (r-FX-1) | 3 | none | | 80 |
| Ex. 8C | 20 | none | | none | | 80 |
| Ex. 9C | 17 | from Ex. 4C | 3 | none | | 80 |

**Table 4**

| Run | Properties of porous membranes | |
|---|---|---|
| | Porosity (%) | Water permeability (LMH) |
| Ex. 5 | 85 | 909 |
| Ex. 6 | 79 | 273 |
| Ex. 7 | 82 | 52 |
| Ex. 8C | 83 | 0 |
| Ex. 9C | 82 | 41 |

Data comprised in Table 8 convey the conclusion that VDF-based ionisable additives are more effective than TFE-based ionisable additives in improving water permeability of membranes comprising the same.

**Evaluation of mechanical properties of membranes comprising additive (r-FX-1) and additive of comparison of Ex. 4C**

Mechanical properties of porous membranes were evaluated performing mechanical properties testing on corresponding dense films manufactured using a liquid casting solution comprising DMAC as solvent and 10% by weight of PVDF-1 to which the additive was added in such an amount so as to reach a concentration of 23% by weight based on the total weight of PVDF and additive.

Mechanical properties were ascertained according to ASTM D638 (Tupe V, grip distance: 25.4 mm, initial length: 21.5 mm).

**Table 5**

| Additive type | From Ex. 4C | (r-FX-1) |
|---|---|---|
| **Modulus [MPa]** | 945 (61) | 1145 (75) |
| **Stress at break [MPa]** | 37 (1) | 57 (8) |
| **Strain at break [%]** | 10 (1) | 142 (7) |

Data summarized in Table above clearly show that the addition of an additive having VDF-based backbone structure, instead of a similar additive having TFE-based backbone structure, is such to deliver items possessing significantly higher mechanical properties.

## Claims

**1.** A composition [composition ($C^L$)] comprising:

- at least one vinylidene fluoride (VDF) polymer [polymer (VDF)], and
- at least one fluorinated ionisable copolymer [polymer (FX)] comprising:

(i) a plurality of ionisable groups selected from the group consisting of $-SO_3X_a$, $-PO_3X_a$ and $-COOX_a$, whereas $X_a$ is H, an ammonium group or a monovalent metal, and
(ii) recurring units derived from vinylidene fluoride (VDF) in an amount of at least 60 % moles, with respect to all recurring units of the polymer (FX), wherein the amount of ionisable groups in polymer (FX) is of at least 0.15 meq/g;

wherein polymer (F) is different from polymer (FX);
- at least one liquid medium [medium (L)] comprising at least one organic solvent; and
- optionally at least one further ingredient.

**2.** The composition ($C^L$) of Claim 1, wherein polymer (VDF) is selected among polyaddition polymers comprising recurring units derived from VDF and, optionally, recurring units derived from at least one ethylenically unsaturated monomer comprising fluorine atom(s) different from VDF, which is generally selected from the group consisting of:

(a) $C_2$-$C_8$ perfluoroolefins such as tetrafluoroethylene (TFE), hexafluoropropylene (HFP), perfluoroisobutylene;
(b) hydrogen-containing $C_2$-$C_8$ fluoroolefins different from VDF, such as vinyl fluoride (VF), trifluoroethylene (TrFE), hexafluoroisobutylene (HFIB), perfluoroalkyl ethylenes of formula $CH_2$=CH-$R_{f1}$, wherein $R_{f1}$ is a $C_1$-$C_6$ perfluoroalkyl group;
(c) $C_2$-$C_8$ chloro- and/or bromo-containing fluoroolefins such as chlorotrifluoroethylene (CTFE);
(d) perfluoroalkylvinylethers (PAVE) of formula $CF_2$=$CFOR_{f1}$, wherein $R_{f1}$ is a $C_1$-$C_6$ perfluoroalkyl group, such as $CF_3$ (PMVE), $C_2F_5$ or $C_3F_7$;
(e) perfluorooxyalkylvinylethers of formula $CF_2$=$CFOX_0$, wherein $X_0$ is a a $C_1$ -$C_{12}$ perfluorooxyalkyl group comprising one or more than one ethereal oxygen atom, including notably perfluoromethoxyalkylvinylethers of formula $CF_2$ =$CFOCF_2OR_{f2}$, with $R_{f2}$ being a $C_1$-$C_3$ perfluoro(oxy)alkyl group, such as $-CF_2CF_3$, $-CF_2CF_2-O-CF_3$ and $-CF_3$; and
(f) (per)fluorodioxoles of formula:

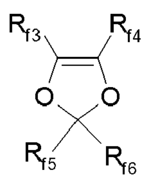

wherein each of $R_{f3}$, $R_{f4}$, $R_{f5}$ and $R_{f6}$, equal to or different from each other, is independently a fluorine atom, a $C_1$-$C_6$ perfluoro(oxy)alkyl group, optionally comprising one or more oxygen atoms, such as $-CF_3$, $-C_2F_5$, $-C_3F_7$, $-OCF_3$ or $-OCF_2CF_2OCF_3$.

**3.** The composition ($C^L$) of Claim 2, wherein polymer (VDF) is a polymer comprising :

(a') at least 60 % by moles, preferably at least 75 % by moles, more preferably 85 % by moles of recurring units derived from vinylidene fluoride (VDF);
(b') optionally from 0.1 to 30%, preferably from 0.1 to 20%, more preferably from 0.1 to 15%, by moles of recurring units derived from a fluorinated monomer different from VDF; and
(c') optionally from 0.1 to 10 %, by moles, preferably 0.1 to 5 % by moles, more preferably 0.1 to 1 % by moles of recurring units derived from one or more hydrogenated monomer(s),

all the aforementioned % by moles being referred to the total moles of recurring units of the polymer (VDF).

**4.** Composition ($C^L$) of anyone of the preceding claims, wherein polymer (FX) comprises a plurality of $-SO_3X_a$ group, whereas $X_a$ is H, an ammonium group or a monovalent metal, that is to say is a polymer ($F_{SO3X}$) comprising recurring units derived from at least one ethylenically unsaturated fluorinated monomer containing at least one $-SO_2X$ group, with X being a halogen, $-OX_a$, with $X_a$ being H, an ammonium group or a monovalent metal(monomer (A), hereinafter); recurring units derived from VDF, and optionally recurring units deriving from at least one ethylenically unsaturated fluorinated monomer free from $-SO_2X$ group, as above detailed, different from VDF (monomer (B), hereinafter).

**5.** The composition ($C^L$) of Claim 4, wherein polymer ($F_{SO3X}$) is selected from those consisting essentially of:

(1) recurring units derived from vinylidene fluoride (VDF), these recurring units (1) being in an amount of 55 to 99 % moles, preferably 70 to 95 % moles, with respect to total moles of recurring units of polymer ($F_{SO3X}$);
(2) recurring units derived from at least one monomer selected from the group consisting of:

(j) sulfonyl halide fluorovinylethers of formula: $CF_2=CF-O-(CF_2)_mSO_2X$, with X being $OX_a$, with $X_a$ as above detailed, F or Cl, preferably F, wherein m is an integer between 1 and 10, preferably between 1 and 6, more preferably between 2 and 4, even more preferably m equals 2;
(jj) sulfonyl fluoride fluoroalkoxyvinylethers of formula: $CF_2=CF-(OCF_2CF(R_{F1}))_w-O-CF_2(CF(RF_2))_ySO_2X$ with X being $OX_a$, with $X_a$ as above detailed, F or Cl, preferably F, wherein w is an integer between 0 and 2, $R_{F1}$ and $R_{F2}$, equal or different from each other, are independently F, Cl or a $C_1$-$C_{10}$ fluoroalkyl group, optionally substituted with one or more ether oxygens, y is an integer between 0 and 6; preferably w is 1, $R_{F1}$ is $-CF_3$, y is 1 and $R_{F2}$ is F; and
(jjj) mixtures thereof;
these recurring units (2) being in an amount of 1 to 45 % moles, preferably 5 to 30 % moles, with respect to total moles of recurring units of polymer ($F_{SO3X}$); and

(3) optionally, recurring units derived from at least one hydrogenated monomer or fluorinated monomer different from VDF; these recurring units (3) being generally in an amount of 0 to 30 % moles, preferably 0 to 15 % moles, with respect to total moles of recurring units of polymer ($F_{SO3X}$).

**6.** The composition ($C^L$) according to anyone of the preceding claims, whereas the said ionisable groups are present in polymer (FX) in an amount of at most 3.50 meq/g, preferably at most 3.20 meq/g, more preferably at most 2.50 meq/g, with respect to the total weight of polymer (FX) and/or of at least 0.15, preferably at least 0.25, more preferably at least 0.75 meq/g, with respect to the total weight of polymer (FX).

**7.** The composition ($C^L$) according to anyone of the preceding claims, which composition comprises an overall amount of polymer (FX) and polymer (VDF) of at least 1 wt.%, more preferably of at least 3 wt.%, even more preferably of at least 5 wt.%, based on the total weight of medium (L), polymer (FX) and polymer (VDF), and/or composition ($C^L$) preferably comprises an overall amount of polymer (FX) and polymer (VDF) of at most 60 wt.%, more preferably of at most 50 wt.%, even more preferably at most 30 wt.%, based on the total weight of medium (L), polymer (FX) and polymer (VDF).

**8.** The composition ($C^L$) according to anyone of the preceding claims, wherein polymer (FX) is used as an additive for polymer (VDF), and polymer (VDF) is present in predominant amount over polymer (FX) in composition ($C^L$), and preferably the weight ratio polymer (FX)/polymer (VDF) is of at least 3/97 wt/wt, preferably at least 5/95 wt/wt and/or it is less than 50/50, preferably less than 40/60, preferably less than 30/70.

**9.** A method for manufacturing a porous membrane, said method comprising:

step (i): preparing a composition ($C^L$) according to anyone of Claims 1 to 8;
step (ii): processing the composition provided in step (i) thereby providing a film; and,
step (iii): processing the film provided in step (ii), generally including contacting the film with a non-solvent medium [medium (NS)], thereby providing a porous membrane.

**10.** The method of Claim 9, wherein the medium (NS) comprises water and, optionally, at least one organic solvent selected from alcohols or polyalcohols.

**11.** The method of Claim 8 or 9, whereas in step (ii), composition ($C^L$) is processed by casting thereby providing a film.

**12.** The method of Claim 8 or 9, wherein composition ($C^L$) is pumped through a spinneret, together with at least one supporting fluid.

**13.** A porous membrane comprising:

- at least one vinylidene fluoride polymer [polymer (VDF)], as described above; and
- at least one fluorinated ionisable copolymer [polymer (FX)] comprising:

(i) a plurality of ionisable groups selected from the group consisting of $-SO_3X_a$, $-PO_3X_a$ and $-COOX_a$, whereas $X_a$ is H, an ammonium group or a monovalent metal, and
(ii) recurring units derived from vinylidene fluoride (VDF) in an amount of at least 60 % moles, with respect to all recurring units of the polymer (FX), wherein the amount of ionisable groups in polymer (FX) is of at least 0.15 meq/g;

wherein polymer (F) is different from polymer (FX).

**14.** The porous membrane of Claim 13, which is a porous composite membrane assembly comprising:

- at least one substrate layer, preferably a non-woven substrate,
- at least one top layer, and
- between said at least one substrate layer and said at least one top layer, at least one layer comprising at least one polymer (F) and a polymer (FX).

**15.** A method of separating an aqueous medium, said method comprising contacting said aqueous medium with a porous membrane according to Claim 13 or 14.

Europäisches Patentamt
European Patent Office
Office européen des brevets

# EUROPEAN SEARCH REPORT

Application Number
EP 17 18 1801

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 6 140 436 A (DOYLE CHRISTOPHER MARC [US] ET AL) 31 October 2000 (2000-10-31)<br>* examples 1,5 *<br>----- | 1-7<br>8 | INV.<br>C08J5/22<br>C08L27/16 |
| Y<br><br><br><br><br><br><br><br><br><br><br>A | HAI-PENG XU ET AL: "Preparation and characterizations of charged PVDF membranes via composite thermally induced phase separation (C-TIPS) method", JOURNAL OF INDUSTRIAL AND ENGINEERING CHEMISTRY, vol. 21, 25 January 2015 (2015-01-25), pages 1005-1013, XP055419869, KOREA ISSN: 1226-086X, DOI: 10.1016/j.jiec.2014.05.009<br>* section 2.2;<br>table 1 *<br>----- | 8<br><br><br><br><br><br><br><br><br><br><br>9-15 | |

TECHNICAL FIELDS SEARCHED (IPC)

B01J
C08F
C08J
C08L

The present search report has been drawn up for all claims

| Place of search | Date of completion of the search | Examiner |
|---|---|---|
| The Hague | 30 October 2017 | Dessemond, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 17 18 1801

This annex lists the patent family members relating to the patent documents cited in the above-mentioned European search report. The members are as contained in the European Patent Office EDP file on
The European Patent Office is in no way liable for these particulars which are merely given for the purpose of information.

30-10-2017

| Patent document cited in search report | Publication date | Patent family member(s) | Publication date |
|---|---|---|---|
| US 6140436 A | 31-10-2000 | AU 2594899 A | 30-08-1999 |
| | | CA 2319543 A1 | 19-08-1999 |
| | | CN 1290273 A | 04-04-2001 |
| | | DE 69911378 D1 | 23-10-2003 |
| | | DE 69911378 T2 | 24-06-2004 |
| | | EP 1053262 A1 | 22-11-2000 |
| | | JP 2002503734 A | 05-02-2002 |
| | | NO 20004027 A | 10-10-2000 |
| | | US 6025092 A | 15-02-2000 |
| | | US 6140436 A | 31-10-2000 |
| | | WO 9941292 A1 | 19-08-1999 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2003045662 A
- US 6274677 B, DAIKIN
- US 7455934 B
- US 2003023015 A


### Non-patent literature cited in the description


- **LANG, WAN-ZHONG et al.** Preparation and characterization of PVDF_PFSA blend hollow fiber UF membrane. *Journal of Membrane Science,* 2007, vol. 288, 123-131
- **XU, HAI-PENG et al.** Preparation and characterizations of charged PVDF membranes via composite thermally induced phase separation (C-TIPS) method. *Journal of Industrial and Engineering Chemistry,* 2015, vol. 21, 1005-1013
- Handbook of Industrial Membrane Technology. Noyes Publications, 1990, 70-78
- **SMOLDERS K. et al.** Terminology for membrane distillation. *Desalination,* 1989, vol. 72, 249-262
- **SMOLDERS, K. et al.** Terminology for membrane distillation. *Desalination,* 1989, vol. 72, 249-262